(19)

Europäisches
Patentamt

European
Patent Office

Office européen
des brevets

(11) **EP 4 763 903 A1**

(12) **EUROPEAN PATENT APPLICATION**

(43) Date of publication:
**24.06.2026 Bulletin 2026/26**

(21) Application number: **24220648.0**

(22) Date of filing: **17.12.2024**

(51) International Patent Classification (IPC):
*C08K 3/22* (2006.01)  *C08L 23/12* (2006.01)

(52) Cooperative Patent Classification (CPC):
(C-Sets available)
C08K 2003/222; C08K 2201/005; C08K 2201/006
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **GLOGER, Dietrich**
**4021 Linz (AT)**
• **MILEVA, Daniela**
**4021 Linz (AT)**

(74) Representative: **Maiwald GmbH**
**Elisenhof**
**Elisenstraße 3**
**80335 München (DE)**

(54) **RECYCLED POLYMERS WITH REDUCED VOLATILE ORGANIC COMPOUNDS**

(57) The present invention provides a composition comprising: recycled polymer comprising at least 60 wt.% of recycled polypropylene, based on the total weight of the recycled polymer, and a magnesium oxide in an amount in a range of 0.1 to 15 wt.%, based on the total weight of the composition. The present invention further provide a process for preparing said composition. The present invention further provides a use of a magnesium oxide for reducing the emission of one or more volatile organic compounds from a recycled polymer.

FIG. 1

**(Cont. next page)**

EP 4 763 903 A1

(52) Cooperative Patent Classification (CPC): (Cont.)

C-Sets
**C08K 3/22, C08L 23/12;**
**C08L 23/12, C08L 23/04, C08K 3/22**

**Description**

**TECHNICAL FIELD**

The present invention relates to a composition comprising recycled polymer and a magnesium oxide, and to a process for preparing the same. The present invention further relates to a use of a magnesium oxide for reducing the emission of one or more volatile organic compounds from recycled polymer or from a composition comprising said recycled polymer. Moreover, the present invention relates to a method of reducing the emission of one or more volatile organic compounds from recycled polymer or from a composition comprising said recycled polymer.

**BACKGROUND OF INVENTION**

An important requirement in the field of polyolefin technology is often that a polyolefin material has a comparatively low level of emitting volatiles and odor relevant substances. For example, a low level of emissions is very relevant for interior applications of polyolefins in the automotive industry. Typical volatile compounds which are relevant in this field are, for example, acetaldehyde, aromatics, acetone, tert-butanol, acetic acid, and acrolein. In general, emissions of volatiles from polyolefins should be as low as possible. Recycled polyolefins typically exhibit a comparatively high level of emissions. With the demand of the market of using said recycled polyolefins, it became extremely challenging to reduce the level of emissions, particularly while at the same time suppress the formation of other not desired substances.

EP2976384A2 relates to the recycling of polyolefin materials from packaging materials. WO2020176287A1, US11161091 B2 and US11965081 B2 relate to compositions including a polymer component and an odor suppressant. KR101132922B1 relates to a composition with reduced total volatile organic compounds. WO2019061266A1, WO2019061268A1 and US11248116B2 relate to thermoplastic polyolefin compositions useful for aldehyde abatement.

There is a continuing need in the art for compositions comprising recycled polyolefins which emit little volatile substances to its surroundings. There is a continuing need in the art for methods to reduce the emission of volatile substances from recycled polyolefins to its surrounding.

**OBJECT AND SUMMARY OF INVENTION**

One object of the present invention is the provision of an improved composition comprising a recycled polymer, and particularly a polypropylene-rich recycled polymer. Another object of the present invention is to provide a composition comprising a (polypropylene-rich) recycled polymer having a reduced emission of one or more volatile organic compounds which can be typically found in said (polypropylene-rich) recycled polymer. Another object of the present invention is to provide a method or use for reducing the emission of said compounds from a (polypropylene-rich) recycled polymer or compositions comprising the same.

One or more of the above objects are achieved by the composition, the process, the use, and/or the method according to the present invention.

In one aspect, the present invention provides a composition comprising:

- recycled polymer comprising at least 60 wt.% of recycled polypropylene, based on the total weight of the recycled polymer, and
- a magnesium oxide in an amount in a range of 0.1 to 15 wt.%, based on the total weight of the composition.

The present invention is based on the finding that magnesium oxide can be used to scavenge, or reduce the level of, emitted volatile and/or odorant substances from recycled polymers, and particularly polypropylene-rich recycled polymers. In particular, it was found that magnesium oxide is useful for reducing the emission of several volatile and/or odorant substances which are relevant in the automotive industry such as acetaldehyde, acetone, tert-butanol, acetic acid, and acrolein. The reduction or scavenging of said substances can be achieved while at the same time maintaining a low level of fogging and/or total emissions.

In one embodiment, the composition comprises the recycled polymer in an amount of at least 50 wt.%, like in an amount of 75 wt.%, based on the total weight of the composition.

In one embodiment, the recycled polymer comprises the recycled polypropylene together with recycled polyethylene in a weight ratio in a range of 60:40 to 99:1.

In one embodiment, the recycled polymer is at least partially derived from post-consumer waste.

In one embodiment, the recycled polymer has one or more of the following characteristics:

(i) a melt flow ($MFR_2$), determined according to ISO 1133 at 230 °C and 2.16 kg, in a range from 5.0 to 50 g/10 min,
(ii) an ethylene content (C2(total)), determined by FT-IR spectroscopy calibrated by quantitative $^{13}$C-NMR spectro-

scopy, in a range from 3.0 to 15.0 wt.-%,

(iii) a soluble fraction (SF) content, determined according to CRYSTEX analysis, in the range from 5.0 to 20.0 wt.-%, and

(iv) an ethylene content of the soluble fraction (C2(SF)), according to CRYSTEX analysis, determined by FT-IR spectroscopy calibrated by quantitative $^{13}$C-NMR spectroscopy, in the range from 15 to 50 wt.-%.

In one embodiment, the composition is a dry blend. In an alternative embodiment, the composition is a melt-blended polymer compound.

Another aspect of the present invention provides a process for preparing a composition, preferably a composition according to the present invention, the process comprising the steps of:

- providing recycled polymer comprising at least 60 wt.% of recycled polypropylene, based on the total weight of the recycled polymer,
- providing a magnesium oxide,
- optionally providing one or more additional components selected from unused polymers, fillers, fibers, and additives,
- mixing the recycled polymer and the magnesium oxide, and the optional one or more additional components, to provide a composition comprising the recycled polymer, the magnesium oxide, and the optional one or more additional components, and
- optionally heating the composition.

In yet another aspect, the present invention provides a use of a magnesium oxide for reducing the emission of one or more volatile organic compounds from recycled polymer or from a composition comprising recycled polymer.

In yet another aspect, the present invention provides a method for reducing the emission of one or more volatile organic compounds from a recycled polymer or from a composition comprising said recycled polymer, the method comprising mixing a magnesium oxide with the recycled polymer or a composition comprising the same.

In one embodiment, the one or more volatile organic compounds is/are acrolein, hexanal, acetic acid, acetaldehyde, acetone, tert-butanol, benzene, or any combination thereof, and optionally in combination with one or more additional volatile organic compounds. In one embodiment, the one or more volatile organic compounds is acrolein, optionally in combination with one or more additional volatile organic compounds. In one embodiment, the one or more volatile compounds is/are acetic acid, acetaldehyde, acetone, tert-butanol, or any combination thereof, and optionally in combination with one or more additional volatile organic compounds.

In one embodiment, the use comprises mixing the magnesium oxide with the recycled polymer to provide a composition, and heating the provided composition (e.g. to a temperature of in a range of 150 to 300°C, preferably in a range of 180 to 280°C, 200 to 280°C, or 210 to 260°). In one embodiment, the use comprises a melt blending or melt extrusion of the magnesium oxide with the recycled polymer or the composition comprising the same.

The present invention is further described in the following detailed description of the present invention.

## FIGURES

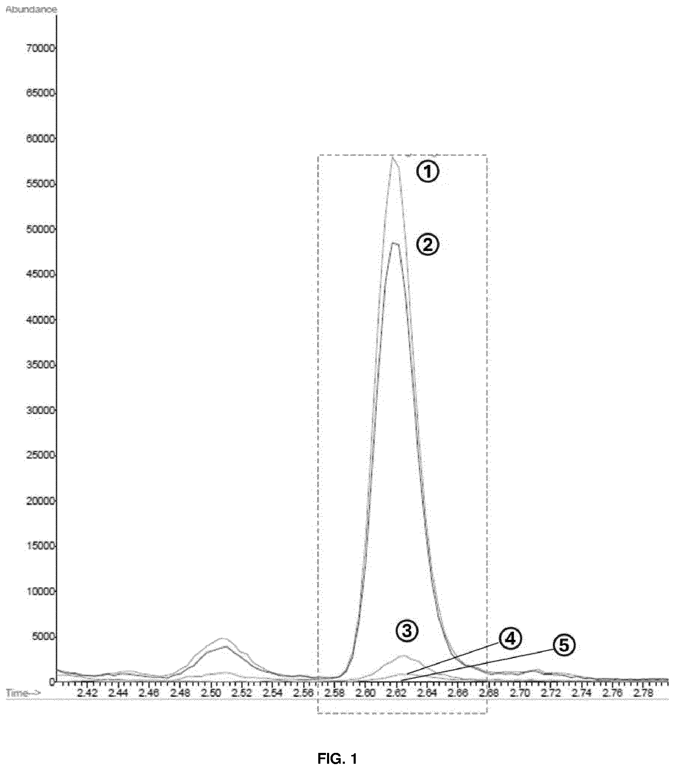

**FIG.1** shows an overlay of excerpts of five HS-GC-MS spectra measured using samples of example Ref.1 (spectrum **with highest** signal **peak labelled** "1"), comparative example **CE1** (spectrum **with** second **highest peak labelled** "2"), **and** inventive example **IE1** (spectrum **with** signal **peak labelled** "3"), a **sample** of an acrolein **standard** (spectrum **with** signal **peak labelled "4"), and** a **blank** sample which **shows** no acrolein **peak** (spectrum **labelled** "5"). The signal at a retention time of about 2.62 min corresponds to acrolein.

## DEFINITIONS

The term "recycled polymer" (incl. "recycled polypropylene" and "recycled polyethylene") relates to polymer which is obtained by recycling plastic waste. The plastic waste for recycling may be derived from post-industrial waste and/or post-consumer waste. A recycled polymer differs from a newly produced (unused) polymer in its chemical structure, chemical composition, and/or its physical properties. For example, when compared to its unused counterpart, a recycled polymer typically has a less homogeneous chemical structure as it has been a subject to e.g. oxidative degradation, radical chain scission and/or radical recombination during its processing and end use. Furthermore, recycled polymer typically includes organic impurities, mineral impurities and/or additives from its previous service lifetime. It is possible that a recycled polymer is made from a comparatively pure feedstock of a specific recycled polymer, like a recycled polypropylene feedstock. In such case, it may be that the recycled polymer is essentially free of other recycled polymers. However, it is more often the case that recycled polymer comprises a blend of different types of recycled polymers which are difficult to separate, like polypropylene and polyethylene. Accordingly, a recycled polymer is a rather heterogeneous multi-component system (like a phase-separated system or a single phase system that contains non-phase heterogeneities) leading to overall deteriorated properties, when compared to unused polymer, like a decreased long-term stability and decreased mechanical properties.

**"Post-industrial waste" is waste material which is generated during a** manufacturing process. Post-industrial waste typically does not include re-utilized material (e.g. rework or regrind) that has been generated in a given process and is capable of being reclaimed within that same process. Sources of post-industrial waste may be, but are not necessarily limited to, off-grade materials from plastics producers, processing purge material and scrap form plastics processors, or commercial industrial products made of, or containing, plastics, including packaging and containers.

**"Post-consumer waste"** is **waste material which is generated by the end-**users (consumers) of products that have fulfilled their intended purpose. Post-consumer waste usually contains residual contaminants which are typical for consumable goods such as fragrances, and the like. Sources of post-consumer waste may be, but are not limited to, disposables, like personal goods, packaging films, containers, etc..

**The term "unused polymer" (the term "virgin grade polymer" can be used synonymously) relates to a** newly produced polymer. A newly produced polymer has not completed a first cycle of serving its purpose.

**A "volatile" organic compound as described herein is an organic compound which** has a boiling point of below 200°C.

**The expression "for reducing the** emission of one or more volatile organic compounds from a recycled **polymer"** means that the emission of one or more volatile organic compounds from a recycled polymer is reduced by using a magnesium oxide as described herein, when compared to the emission of one or more volatile organic compounds from the same recycled polymer under the same testing conditions but in the absence of the magnesium oxide. For example, a use of a magnesium oxide for reducing the emission of acetic acid from a recycled polymer by 90% is determined in comparison to the same recycled polymer under the same testing conditions but in the absence of the magnesium oxide. **In this context, "in the absence of the magnesium oxide" means that no magnesium oxide is** added to the recycled polymer in the comparative testing but it does not exclude that minor residual amounts of magnesium oxide are present as part of the recycled polymer. When the use is part of a process for preparing a composition comprising one or more additional components (e.g. a melt-blended compound comprising one or more additional unused polymers), then the reduction of the emissions is to be determined in comparison with the same composition but which was made without the use of the magnesium oxide. The reduction of the emission of one or more volatile organic compounds from a recycled polymer can be determined by a person of skill in the art. For example, the reduction of the emission may be determined and/or quantified by chromatography, like gas chromatography such as headspace gas chromatography (HS-GC) which is optionally combined with mass spectrometry (HS-GC-MS). A suitable sample for determining the reduction of the emissions is, for example, a powder sample (e.g. obtained by (cryo-)milling). A suitable amount of the powder sample may be an amount of about 2.0 g. A suitable method for determining the reduction of emissions is described in detail herein in the Methods section.

**The term "polypropylene" as used herein is to be understood in a broad sense in that it encompasses** propylene homopolymers, copolymers of propylene, heterophasic propylene copolymers (HECOs), and mixtures of said substances. The polypropylene may be made by any suitable polymerization process known in the art. The polypropylene may be a post-reactor modified polypropylene, like a grafted polypropylene (e.g. maleic anhydride grafted polypropylene or the like) or a long chain branched polypropylene.

**The term "propylene homopolymer" relates to a polypropylene that consists substantially, i.e. of at** least 99.5 wt.%, preferably of at least 99.8 wt.%, like of at least 99.9 wt.%, of propylene units.

**The term "copolymer of propylene" or "propylene copolymer" as** used herein refers to a copolymer of **propylene with one or more $\alpha$-olefin, for example, one or more $\alpha$-olefin chosen from the group of $\alpha$-**olefins having 2 or 4 to 10 C-**atoms**, **like ethylene. The amount of $\alpha$-**olefin, like ethylene, is typically less than 10 wt. % (e.g. in a range of 1 to less than 8 wt.%), based on the total weight of the propylene copolymer.

**A "heterophasic propylene copolymer (HECO)" in the meaning of the present disclosure is** a propylene polymer composition comprising: i) a matrix (M) being a propylene homo- or copolymer, and ii) an elastomer (E) being a copolymer comprising units derived from propylene and ethylene and/or $C_4$ to $C_8$ **a-olefin. In that context, the term "heterophasic" indicates that the elastomer is (finely) dispersed in** the (crystalline) matrix. In other words, the elastomer forms inclusions in the matrix. Thus, the matrix contains (finely) dispersed inclusions being not part of the matrix and said inclusions contain the **elastomer. The term "inclusion" can be understood in that the matrix and the inclusion form different** phases within the propylene copolymer (HECO), said inclusions are for instance visible by high resolution microscopy, like electron microscopy or scanning force microscopy. The elastomeric phase has typically a high amount of ethylene and/or $C_4$ to $C_8$ a-olefin comonomer (usually ethylene) that is not randomly distributed in the polymer chain but is distributed in a comonomer-rich block structure and a propylene-rich block structure. A heterophasic propylene copolymer can be differentiated from a one-phasic propylene copolymer (or another one-phasic polymer) by its multi-phases (i.e., two or more phases) as detected by microscopy.

**Where the term "comprising" is used herein, it does not exclude that further non-**specified elements **are**

**present. Where the term "essentially consisting of" is used herein, it is does not exclude that** further non-specified elements are present that are not materially affecting the essential characteristics of the defined subject-matter. For the purposes of **the present invention, the terms "essentially consisting of" and "consisting of" are considered to be specific embodiments of the term "comprising of". Whenever the terms "including" or "having" are used, these terms are meant to be equivalent** to **"comprising"** as defined above.

## DETAILED DESCRIPTION

### I. Composition

One aspect of the present invention provides a composition comprising:

- recycled polymer comprising at least 60 wt.% of recycled polypropylene, based on the total weight of the recycled polymer, and
- a magnesium oxide in an amount in a range of 0.1 to 15 wt.%, based on the total weight of the composition.

### I.1 Recycled polymer

The composition comprises recycled polymer. The recycled polymer comprises at least 60 wt.% of recycled polypropylene, based on the total weight of the recycled polymer.

The recycled polymer may comprise the recycled polypropylene in an amount in a range of 60 to 99 wt.%, like in a range of 70 to 98 wt.%, in a range of 80 to 97 wt.%, in a range of 85 to 97 wt.%, or in a range of 90 to 96 wt.%, based on the total weight of the recycled polymer. The amount of the recycled polypropylene (and other optionally present recycled polymers, like recycled polyethylene) in the recycled polymer can be determined by IR spectroscopy as known in the art.

The recycled polypropylene is not particularly limited in terms of its type of polypropylene. The recycled polypropylene may be, but is not limited to, recycled propylene homopolymer, recycled propylene copolymer, recycled heterophasic propylene copolymer, and mixtures thereof, and the like.

It may be that the recycled polymer comprises the recycled polypropylene as the sole recycled polymer. This may be the case when the feedstock for the recycled polymer is comparatively pure in terms of the polymer type. However, the recycled polymer typically comprises a blend of recycled polyolefins. The recycled polymer may comprise the recycled polypropylene in combination with a recycled polyethylene. The recycled polyethylene is not particularly limited in terms of its type. The recycled polyethylene may be, but it is not limited to, recycled LDPE, recycled HDPE, recycled ethylene copolymers, etc.. The recycled polyethylene may be present in the recycled polymer in an amount in a range of 1 to 40 wt.%, like in a range of 2 to 30 wt.%, in a range of 3 to 20 wt.%, in a range of 3 to 15 wt.%, or in a range of 4 to 10 wt.%, based on the total weight of the recycled polymer.

The recycled polymer may comprise the recycled polypropylene and the recycled polyethylene in a weight ratio in a range of 60:40 to 99:1, like in a range of 70:30 to 98:2, in a range of 80:20 to 97:3, in a range of 85:15 to 97:3, or in a range of 90:10 to 96:4.

The recycled polymer typically comprises additional components (contaminants). Additional components may be, but are not limited to, inorganic materials, acrylonitrile butadiene styrene (ABS) polymers, polyamides, fragrances, fatty acids, and the like. For example, the recycled polymer may comprise inorganic materials (e.g. residual inorganic fillers, inorganic fibers, and the like) in an amount in a range of 0.1 to 5 wt.%, like in a range of 0.2 to 3 wt.%, in a range of 0.2 to 2 wt.%, or in a range of 0.2 to 1 wt.%. For example, the inorganic materials may comprise, but are not limited to, calcium carbonate, talc, titanium dioxide, or any mixture thereof. Additionally or alternatively, the recycled polymer may comprise (minor) amounts of other recycled polymers, like polystyrene, ABS, and/or polyamide-6. A minor amount of other recycled polymers may be less than 2 wt.% (e.g. 0.1 to 1.5 wt.%) or less than 1 wt.% (e.g. 0.1 to 0.8 wt.% or 0.1 to 0.5 wt.%).

In one embodiment, the recycled polymer comprises (essentially consists of):

60 to 99 wt.%, like in a range of 70 to 98 wt.%, in a range of 80 to 97 wt.%, in a range of 85 to 97 wt.%, or in a range of 90 to 96 wt.%, of recycled polypropylene,
1 to 40 wt.%, like in a range of 2 to 30 wt.%, in a range of 3 to 20 wt.% or in a range of 3 to 15 wt.%, or in a range of 4 to 10 wt.% of recycled polyethylene, and
optionally 0.1 to 5 wt.%, like in a range of 0.2 to 3 wt.%,in a range of 0.2 to 2 wt.%, or in a range of 0.2 to 1 wt.%, of inorganic materials, and
optionally (minor) amounts of other recycled polymers, like polystyrene and/or polyamide-6, based on the total weight of the recycled polymer.

The weight amounts may be selected such that the components add up a total weight of 100 wt.%.

The recycled polymer is a polymer which is obtained by recycling plastic waste, and typically by mechanically recycling plastic waste. The plastic waste may be derived from post-industrial waste and/or post-consumer waste. Typically, the plastic waste is at least partially derived from post-consumer waste. The plastic waste may be fully derived from post-consumer waste. In one preferred embodiment, the recycled polymer is partially or fully derived from post-consumer waste. In one preferred embodiment, the recycled polymer is obtained by mechanically recycling plastic waste which is partially or fully derived from post-consumer waste.

When the recycled polymer is at least partially derived from post-consumer waste, it usually contains contaminants which are typical for polymer which is recycled from post-consumer waste. Said typical contaminants may include, for example, residual amounts of fragrances, and particularly limonene. The recycled polymer may comprise a limonene content of at least 0.5 ppm, at least 2 ppm or at least 5 ppm of limonene. Upper limits depend on the quality of the recycled polymer and may be about 100 ppm, 75 ppm or 50 ppm. In one embodiment, the recycled polymer comprises a limonene content in range of 0.5 to 100 ppm, like in a range of 2 to 75 ppm or 5 to 50 ppm. The limonene content may be determined by HS-SPME-GC-MS.

The recycled polymer may have a melt flow (MFR$_2$), determined according to ISO 1133 at 230 °C and 2.16 kg, in a range from 5.0 to 50 g/10 min, and preferably in a range of 10 to 40 g/min, like in a range of 12 to 35 g/10 min or 20 to 30 g/min.

The recycled polymer may have an ethylene content (C2(total)), determined by FT-IR spectroscopy calibrated by quantitative $^{13}$C-NMR spectroscopy, in a range from 3.0 to 15.0 wt.-%, preferably in a range of 3.0 to 10 wt.%, like in a range of 3.0 to 7.5 wt.%. The ethylene content of the recycled polymer may be from ethylene units of polyethylene, like HDPE, LDPE, LLDPE or any mixture thereof. Additionally or alternatively, the ethylene content of the recycled polymer may be from ethylene units of copolymers of ethylene and propylene. There may also be other source of ethylene content in the recycled polymer.

The recycled polymer may have specific properties determined according to CRYSTEX analysis. The recycled polymer may have a soluble fraction (SF) content, determined according to CRYSTEX analysis, in the range from 5.0 to 20.0 wt.-%, preferably in the range from 8.0 to 15.0 wt.-%, like in the range from 10.0 to 13.0 wt.-%. The recycled polymer may have a crystalline fraction (CF) content, determined according to CRYSTEX QC analysis, in the range from 80.0 to 95.0 wt.-%, preferably in the range from 85.0 to 92.0 wt.-%, like in the range from 87.0 to 90.0 wt.-%.

The soluble fraction (SF) and the crystalline fraction (CF) determined according to CRYSTEX analysis may have specific properties. The recycled polymer may have an ethylene content of the soluble fraction (C2(SF)), according to CRYSTEX analysis, determined by FT-IR spectroscopy calibrated by quantitative $^{13}$C-NMR spectroscopy, in the range from 15 to 50 wt.-%, preferably in the range from 20 to 45 wt.-%, like in the range of 25 to 35 wt.-%. The recycled polymer may have an ethylene content of the crystalline fraction (C2(CF)), according to CRYSTEX analysis, determined by FT-IR spectroscopy calibrated by quantitative $^{13}$C-NMR spectroscopy, in the range from 0.5 to 6.0 wt.-%, preferably in the range from 0.8 to 5.5 wt.-%, like in the range from 1.0 to 5.0 wt.-%.

The recycled polymer may have an intrinsic viscosity, determined according to DIN ISO 1628/1, of the soluble fraction (iV(SF)), according to CRYSTEX analysis, in the range from 1.40 to 2.20 dL/g, preferably in the range from 1.50 to 2.00 dL/g, like in the range from 1.60 to 1.90 dL/g. The recycled polymer may have an intrinsic viscosity, determined according to DIN ISO 1628/1, of the crystalline fraction (iV(CF)), according to CRYSTEX analysis, in the range from 1.00 to 2.00 dL/g, preferably in the range from 1.25 to 1.85 dL/g, like in the range from 1.50 to 1.70 dL/g.

The recycled polymer may have all of the following characteristics:

(i) a melt flow (MFR$_2$), determined according to ISO 1133 at 230 °C and 2.16 kg, in a range from 5.0 to 50 g/10 min, preferably in a range of 10 to 40 g/min, like in a range of 12 to 35 g/10 min or 20 to 30 g/min,
(ii) an ethylene content (C2(total)), determined by FT-IR spectroscopy calibrated by quantitative $^{13}$C-NMR spectroscopy, in a range from 3.0 to 15.0 wt.-%, preferably in a range of 3.0 to 10 wt.%, like in a range of 3.0 to 7.5 wt.%,
(iii) a soluble fraction (SF) content, determined according to CRYSTEX analysis, in the range from 5.0 to 20.0 wt.-%, preferably in the range from 8.0 to 15.0 wt.-%, like in the range from 10.0 to 13.0 wt.-%, and
(iv) an ethylene content of the soluble fraction (C2(SF)), according to CRYSTEX analysis, determined by FT-IR spectroscopy calibrated by quantitative $^{13}$C-NMR spectroscopy, in the range from 15 to 50 wt.-%.

The recycled polymer may have all of the following characteristics:

(i) a melt flow (MFR$_2$), determined according to ISO 1133 at 230 °C and 2.16 kg, in a range from 5.0 to 50 g/10 min, preferably in a range of 10 to 40 g/min, like in a range of 12 to 35 g/10 min or 20 to 30 g/min,
(ii) an ethylene content (C2(total)), determined by FT-IR spectroscopy calibrated by quantitative $^{13}$C-NMR spectroscopy, in a range from 3.0 to 15.0 wt.-%, preferably in a range of 3.0 to 10 wt.%, like in a range of 3.0 to 7.5 wt.%,
(iii) a soluble fraction (SF) content, determined according to CRYSTEX analysis, in the range from 5.0 to 20.0 wt.-%, preferably in the range from 8.0 to 15.0 wt.-%, like in the range from 10.0 to 13.0 wt.-%,

(iv) an ethylene content of the soluble fraction (C2(SF)), according to CRYSTEX analysis, determined by FT-IR spectroscopy calibrated by quantitative $^{13}$C-NMR spectroscopy, in the range from 15 to 50 wt.-%, and
(v) an intrinsic viscosity, determined according to DIN ISO 1628/1, of the soluble fraction (iV(SF)), according to CRYSTEX analysis, in the range from 1.40 to 2.20 dUg, preferably in the range from 1.50 to 2.00 dUg, like in the range from 1.60 to 1.90 dL/g.

The recycled polymer may have all of the following characteristics:

(i) a melt flow (MFR$_2$), determined according to ISO 1133 at 230 °C and 2.16 kg, in a range from 5.0 to 50 g/10 min, preferably in a range of 10 to 40 g/min, like in a range of 12 to 35 g/10 min or 20 to 30 g/min,
(ii) an ethylene content (C2(total)), determined by FT-IR spectroscopy calibrated by quantitative $^{13}$C-NMR spectroscopy, in a range from 3.0 to 15.0 wt.-%, preferably in a range of 3.0 to 10 wt.%, like in a range of 3.0 to 7.5 wt.%,
(iii) a soluble fraction (SF) content, determined according to CRYSTEX analysis, in the range from 5.0 to 20.0 wt.-%, preferably in the range from 8.0 to 15.0 wt.-%, like in the range from 10.0 to 13.0 wt.-%,
(iv) an ethylene content of the soluble fraction (C2(SF)), according to CRYSTEX analysis, determined by FT-IR spectroscopy calibrated by quantitative $^{13}$C-NMR spectroscopy, in the range from 15 to 50 wt.-%,
(v) an intrinsic viscosity, determined according to DIN ISO 1628/1, of the soluble fraction (iV(SF)), according to CRYSTEX QC analysis, in the range from 1.40 to 2.20 dL/g, preferably in the range from 1.50 to 2.00 dL/g, like in the range from 1.60 to 1.90 dL/g,
(vi) a crystalline fraction (CF) content, determined according to CRYSTEX QC analysis, in the range from 80.0 to 95.0 wt.-%, preferably in the range from 85.0 to 92.0 wt.-%, like in the range from 87.0 to 90.0 wt.-%,
(vii) an ethylene content of the crystalline fraction (C2(CF)), according to CRYSTEX QC analysis, determined by FT-IR spectroscopy calibrated by quantitative $^{13}$C-NMR spectroscopy, in the range from 0.5 to 6.0 wt.-%, preferably in the range from 0.8 to 5.5 wt.-%, like in the range from 1.0 to 5.0 wt.-%, and
(viii) an intrinsic viscosity, determined according to DIN ISO 1628/1, of the crystalline fraction (iV(CF)), according to CRYSTEX analysis, in the range from 1.00 to 2.00 dUg, preferably in the range from 1.25 to 1.85 dUg, like in the range from 1.50 to 1.70 dL/g.

The recycled polymer typically emits one or more volatile organic compounds such, but not limited to, acetaldehyde, acrolein, hexanal, tert-butanol, acetic acid, benzene, acetone, or any combination thereof. For example, the recycled polymer may emit hexanal in a concentration of at least 20 mg/m$^3$ (e.g. 20 to 100 mg/m$^3$) or at least 40 mg/m$^3$ (e.g. in a range of 40 to 100 mg/m$^3$), as determined by HS-GC-MS. The recycled polymer may emit acetic acid in a concentration of at least 4000 mg/m$^3$ (e.g. 4000 to 20000 mg/m$^3$) or at least 6000 mg/m$^3$ (e.g. in a range of 6000 to 20000 mg/m$^3$ or in a range of 6000 to 15000 mg/m$^3$), as determined by HS-GC-MS. The recycled polymer may emit acetaldehyde in a concentration of at least 1500 mg/m$^3$ (e.g. 1500 to 6000 mg/m$^3$) or at least 2500 mg/m$^3$ (e.g. in a range of 2500 to 6000 mg/m$^3$ or in a range of 2500 to 4000 mg/m$^3$), as determined by HS-GC-MS. The recycled polymer may emit acetone in a concentration of at least 2500 mg/m$^3$ (e.g. 2500 to 10000 mg/m$^3$) or at least 3500 mg/m$^3$ (e.g. in a range of 3500 to 8000 mg/m$^3$ or in a range of 4000 to 6000 mg/m$^3$), as determined by HS-GC-MS. The recycled polymer may emit tert-butanol in a concentration of at least 200 mg/m$^3$ (e.g. 200 to 1000 mg/m$^3$) or at least 350 mg/m$^3$ (e.g. in a range of 350 to 1000 mg/m$^3$ or in a range of 350 to 700 mg/m$^3$), as determined by HS-GC-MS.
The emission may be determined by HS-GC-MS on a (cryo-)powdered sample (e.g. of about 2.0 g) of the composition. A suitable method for determining the emission is also described in detail herein in the Methods section.
The recycled polymer may have specific mechanical properties. The recycled polymer may have a flexural modulus, determined according to ISO 178, of at least 1000 MPa, preferably at least 1200 MPa, like at least 1300 MPa, like in a range of 1300 to 1500 MPa or in a range of 1300 to 1400 MPa. The recycled polymer may have a Charpy Notched impact strength at 23 °C, determined according to ISO 179 1eA, of at least 2.0 kJ/m$^2$, preferably at least 4.0 kJ/m$^2$, like at least 4.5 kJ/m$^2$. The recycled polymer may have a Charpy Notched impact strength at 23 °C, determined according to ISO 179 1eA, in the range of 2.0 to 10 kJ/m$^2$, preferably in the range of 4.0 to 8.0 kJ/m$^2$, like in a range of 4.5 to 7.0 kJ/m$^2$.
The recycled polymer is available as a commercial material. For example, products from the product **series "Purpolen PP", which are commercially available** from mtm plastics GmbH may be used as the recycled polymer. Other suitable products may be, but are not limited to, products with a high recycled **PP content from the product series "Borcycle", which are commercially available from Borealis AG** or one of its affiliates.

## I.2 Magnesium oxide

The composition comprises a magnesium oxide (MgO). The magnesium oxide may be, but is not necessarily limited to, a lightly calcined magnesium oxide.
The magnesium oxide may be a powder or granules, and typically is a powder. The magnesium oxide may have a particle size distribution d50 in a range of 2.0 to 8.0 $\mu$m, like in a range of 3.0 to 6.0 $\mu$m, and/or a particle size distribution d90 in a range of 5.0 to 20 $\mu$m, like in a range of 7.5 to 15 $\mu$m. The particle size distribution d50 and d90 may be determined as the volume-based particle size distribution, measured by laser diffraction as is well-known in the art. The basic magnesium oxide may also be used in a nanocrystalline form (e.g. a particle size distribution d50 of below 1.0 $\mu$m).

Additionally or alternatively, the magnesium oxide may have a specific surface area, determined according to the BET method, in a range of 100 to 200 $m^2$/g, like in a range of 130 to 180 $m^2$/g.

In one embodiment, the magnesium oxide has the following characteristics:

(i) a particle size distribution d50 in a range of 2.0 to 8.0 $\mu$m, like in a range of 3.0 to 6.0 $\mu$m,
(ii) a particle size distribution d90 in a range of 5.0 to 20 $\mu$m, like in a range of 7.5 to 15 $\mu$m, and
(iii) a specific surface area, determined according to the BET method, in a range of 100 to 200 $m^2$/g, like in a range of 130 to 180 $m^2$/g.

Suitable magnesium oxides are commercially available, for example, in form of the product described herein in the example section.

### I.3 The composition

The composition comprises the recycled polymer and the magnesium oxide.

The composition may comprise the recycled polymer in any amount. The composition may comprise the recycled polymer in an amount of at least 50 wt.%, at least 75 wt.%, at least 85 wt.%, at least 90 wt.%, at least 95 wt.%, at least 97 wt.%, at least 98 wt.% or at least 99.0 wt.%. An upper limit of the weight amount may be, for example, 99.9 wt.%, 99.8 wt.%, 99.5 wt.%, 99.0 wt.%, 97.0 wt.% or 95.0 wt.%. Suitable weight ranges of the recycled polymer may be, for example, 50 to 99.9 wt.%, 75 to 99.8 wt.%, 85 to 99.5 wt.%, 90 to 99.0 wt.% or 95 to 99.9 wt.%, 97 to 99.8 wt.%, 98 to 99.8 wt.%, 98.5 to 99.5 wt.%. The weight amounts are referenced to the total weight of the composition. In one embodiment, the composition comprises the recycled polymer in an amount of at least 50 wt.%, based on the total weight of the composition. In one preferred embodiment, the composition comprises the recycled polymer in an amount of at least 75 wt.% (e.g., 75 to 99.8 wt.%, 85 to 99.5 wt.%, or 90 to 99.0 wt.%), based on the total weight of the composition.

The composition comprises the magnesium oxide in an amount in a range of 0.1 to 15 wt.%, and preferably in a range of 0.2 to 15 wt.% (e.g. 1.0 to 15 wt.% or 3.0 to 15 wt.% or 5.0 to 15 wt.%), like in a range of 0.2 to 12 wt.% (e.g. 1.0 to 12 wt.% or 3.0 to 12 wt.% or 5.0 to 12 wt.%), 0.2 to 10 wt.% (e.g. 1.0 to 10 wt.% or 3.0 to 10 wt.% or 5.0 to 10 wt.%), 0.2 to 6.0 wt.%, 0.2 to 3.0 wt.%, 0.2 to 2.0 wt.%, or 0.5 to 1.5 wt.%, based on the total weight of the composition.

In one embodiment, the composition comprises the recycled polymer and the magnesium oxide in a weight ratio in a range of 99.9 : 0.1 to 50 : 50, like in a range of 99.9 : 0.1 to 75.0 : 25.0, in a range of 99.8 : 0.2 to 85.0 : 15.0, in range of 99.9 : 0.2 to 88.0 : 12.0, or in range of 99.8 : 0.2 to 97.0 : 3.0.

The composition may comprise one or more additional components such as, but not necessarily limited to, unused polymers (e.g. preferably unused polyolefins, like polypropylenes or polyethylenes), fillers, fibers, and additives. In one embodiment, the total amount of polymer in the composition (incl. recycled polymer and unused polymer) is at least 50 wt.%, at least 60 wt.%, at least 80 wt.%, at least 85 wt.%, at least 90 wt.%, or at least 95 wt.%, based on the total weight of the composition. Thus, it is possible that the composition comprises the recycled polymer in combination with one or more unused polymers (e.g. unused polyolefins, like polypropylene or polyethylene).

It is however not necessary that the composition contains additional components, like unused polymers, fillers, fibers, and the like. In one embodiment, the composition essentially consists of (or consists of) the recycled polymer, the magnesium oxide, and optionally one or more additives (e.g. in an amount of 0.1 to 4.0 wt.%, 0.1 to 3.0 wt.%, 0.1 to 2.0 wt.%, or 0.1 to 1.0 wt.%).

Suitable additives may be selected from additives which are typically used in the field of polyolefins and are known to the skilled person. Typical additives are acid scavengers, antioxidants, colorants, (UV) light stabilisers, plasticizers, slip agents, anti-scratch agents, mold release agents, nucleating agents, dispersing agents, processing aids, lubricants, pigments, and the like. In one embodiment, the additives are selected from the group consisting of acid scavengers, antioxidants, colorants, (UV) light stabilisers, plasticizers, slip agents, anti-scratch agents, mold release agents, nucleating agents, dispersing agents, processing aids, lubricants and pigments. Such additives are commercially available and for example **described in "**Plastic Additives Handbook", 6th edition 2009 of Hans Zweifel (pages 1141 to 1190).

Additives are often provided in form of a masterbatch comprising a polymer carrier resin and the additives. Polymer carrier resins originating from additive masterbatches are encompassed by the term **"additives" in the meaning of the present disclosure. Th**us, when one or more additives are present in a composition as defined herein, it is possible that the composition comprises a polymer carrier resin as part of the one or more additives.

In one embodiment, the one or more additives at least comprise one or more antioxidants (e.g. a sterically hindered (primary) phenolic antioxidant and/or a (secondary) phosphite-based antioxidant) antioxidants) and one or more acid scavenger. Said additives are known in the art and commercially available. For example, suitable antioxidants may be, but are not limited to, Irganox 1010 and Irgafos 168 which are available from BASF. A suitable acid scavenger is, for example, calcium stearate.

In one embodiment, the composition is essentially free of an unused (virgin grade) acid polymer, like essentially free of an unused (virgin grade) copolymer containing (i) ethylene comonomer and (ii) a carboxylic acid comonomer or ester derivative thereof.

In certain embodiments, the composition comprises (or essentially consists of or consists of):

85 to 99.9 wt.%, preferably 88 to 99.8 wt.%, 90 to 99.8 wt.%, 94 to 99.8 wt.%, 97 to 99.5 wt.% or 98.0 to 99.0 wt.%, of the recycled polymer,

0.1 to 15 wt.%, preferably 0.2 to 12 wt.%, 0.2 to 10 wt.%, 0.2 to 6.0 wt.%, 0.5 to 3.0 wt.%, or 1.0 to 2.0 wt.%, of the magnesium oxide, and

optionally 0.1 to 4.0 wt.%, preferably 0.1 to 3.0 wt.%, 0.1 to 2.0 wt.% or 0.1 to 1.0 wt.%, of one or more additives (e.g. at least comprising one or more antioxidants and/or one or more acid scavenger).

In certain embodiments, the composition comprises (or essentially consists of or consists of):

a) 85 to 99.9 wt.%, preferably 88 to 99.8 wt.%, 90 to 99.8 wt.%, 94 to 99.8 wt.%, 97 to 99.5 wt.% or 98.0 to 99.0 wt.%, of the recycled polymer, wherein the recycled polymer comprises, based on the total weight of the recycled polymer,

(i) 60 to 99 wt.%, like in a range of 70 to 98 wt.%, in a range of 80 to 97 wt.%, in a range of 85 to 97 wt.%, or in a range of 90 to 96 wt.%, of recycled polypropylene,

(ii) 1 to 40 wt.%, like in a range of 2 to 30 wt.%, in a range of 3 to 20 wt.% or in a range of 3 to 15 wt.%, or in a range of 4 to 10 wt.% of recycled polyethylene, and

(iii) optionally 0.1 to 5 wt.%, like in a range of 0.2 to 3 wt.%, in a range of 0.2 to 2 wt.%, or in a range of 0.2 to 1 wt.%, of inorganic materials, and

(iv) optionally (minor) amounts of other recycled polymers,

b) 0.1 to 15 wt.%, preferably 0.2 to 12 wt.%, 0.2 to 10 wt.%, 0.2 to 6.0 wt.%, 0.5 to 3.0 wt.%, or 1.0 to 2.0 wt.%, of the magnesium oxide, and

c) optionally 0.1 to 4.0 wt.%, preferably 0.1 to 3.0 wt.%, 0.1 to 2.0 wt.% or 0.1 to 1.0 wt.%, of one or more additives (e.g. at least comprising one or more antioxidants and/or one or more acid scavenger).

The weight amounts may be selected to add up to 100 wt.%. It is however also possible that the weight amounts are not selected to add up to 100 wt.%, and the remaining weight amount is balanced with one or more additional components as described herein such as, but not limited to, unused polymers (preferably unused polyolefins, like polypropylenes or polyethylenes).

The composition is typically characterized by a low emission level of one or more volatile organic compounds. The composition may be characterized by one or more of, and preferably at least all of (i) to (iv), and optionally all of (i) to (vi):

(i) an emission of acetic acid in a concentration of less than 100 $mg/m^3$, like less than 50 $mg/m^3$ (e.g. less than 10 $mg/m^3$), as determined by HS-GC-MS;

(ii) an emission of acetaldehyde in a concentration of less than 2500 $mg/m^3$, like less than 2000 $mg/m^3$, (e.g. 1250 to less than 2000 $mg/m^3$), as determined by HS-GC-MS;

(iii) an emission of acetone in a concentration of less than 4500 $mg/m^3$, like less than 4000 $mg/m^3$ (e.g. in a range of 2500 to less than 4000 $mg/m^3$), as determined by HS-GC-MS,

(iv) an emission of tert-butanol in a concentration of less than 400 $mg/m^3$, like less than 375 $mg/m^3$ (e.g. in a range of 300 to less than 375 $mg/m^3$), as determined by HS-GC-MS,

(v) an emission of hexanal in a concentration of less than 30 $mg/m^3$, like than 20 $mg/m^3$ (e.g. 5 to less than 20 $mg/m^3$), as determined by HS-GC-MS, and

(vi) an emission of benzene in a concentration of equal to or less than 2 $mg/m^3$, as determined by HS-GC-MS.

The emission may be determined by HS-GC-MS on a (cryo-)powdered sample (e.g. of about 2.0 g) of the composition.

The composition may be a dry blend. The dry blend may be a particulate mixture of the recycled polymer and the magnesium oxide. The dry blend may be obtained by dry blending recycled polymer particles (e.g. powder, granules, or flakes) with magnesium oxide particles (e.g. powder), and optionally heating the dry blend. In such case, the recycled polymer and the magnesium oxide are present in the composition in partially or fully separate form.

Alternatively, the composition may be a melt-blended polymer compound. The melt-blended polymer compound may be obtained by melt-blending (e.g. melt-extruding) the recycled polymer with the magnesium oxide, optionally in combination with one or more additional components as described herein, to provide a polymer compound. Melt-blended polymer compounds can be prepared, for example, using a plastic extruder as known in the art or described herein below. The melt-blended polymer compound is not particularly limited in its shape or structure. Non-limiting examples are pellets, granules and molded articles.

The composition is useful for making polymer compounds or polymer articles, like automotive parts, like an automotive interior part. In one aspect, the present invention provides the use of a composition according to the present invention for making polymer compounds or polymer articles (e.g. automotive parts, like an automotive interior part). In one aspect, the present invention provides a polymer compound or polymer article (e.g. an automotive part, like an automotive interior part) comprising or being composed of the composition according to the present invention.

## II. Process of preparation

In one aspect, the present invention provides a process for preparing a composition, and preferably a composition according to the present invention. The process comprises the steps of:

- providing recycled polymer comprising at least 60 wt.% of recycled polypropylene, based on the total weight of the recycled polymer,
- providing a magnesium oxide,
- optionally providing one or more additional components selected from unused polymers, fillers, fibers, and additives,
- mixing the recycled polymer and the magnesium oxide, and the optional one or more additional components, to provide a composition comprising the recycled polymer, the magnesium oxide, and the optional one or more additional components, and
- optionally heating the composition.

Embodiments and preferred embodiments of the recycled polymer, the magnesium oxide, the optional one or more additional components, and the composition according to the present invention are as described herein above, e.g. in sections I.1 to I.3.

The process may be a process for preparing a dry blend according to the present invention. In such case, the process comprises the steps of:

- providing recycled polymer comprising at least 60 wt.% of recycled polypropylene, based on the total weight of the recycled polymer,
- providing a magnesium oxide,
- optionally providing one or more additional components selected from unused polymers, fillers, fibers, and additives,
- dry blending the recycled polymer and the magnesium oxide, and the optional one or more additional components, to provide a dry blend comprising the recycled polymer, the magnesium oxide, and the optional one or more additional components, and
- optionally heating the composition.

The recycled polymer may be provided in form of a powder, granules, flakes or pellets. The powder or granules may be obtained by grinding larger pieces of the recycled polymer, like pellets of the recycled polymer. It is sometimes preferred that the recycled polymer is provided in form of a powder. The magnesium oxide may be provided in form of a powder, like a powder having a particle size distribution as described herein above in section I.2.

The dry blending may be carried out using a suitable mixing device known in the art, for example, a plow share mixer, a ribbon mixer or a cone single shaft mixer. It is also possible to dry blend the components manually.

The dry blend may optionally be heated. For example, the dry blend may be heated to a temperature in range of 80 to 300°C or 150 to 300°C (e.g. 200 to 280°C or 210 to 260°C). The heating may be carried out for a period of time in a range of 1 to 30 minutes (e.g. 2 to 20 minutes or 5 to 12 minutes).

The process may be a process for preparing a melt-blended polymer compound according to the present invention. In such case, the process comprises the steps of:

- providing recycled polymer comprising at least 60 wt.% of recycled polypropylene, based on the total weight of the recycled polymer,
- providing a magnesium oxide,
- optionally providing one or more additional components selected from unused polymers, fillers, fibers, and additives,

- melt blending the recycled polymer and the magnesium oxide, and the optional one or more additional components, to provide a melt-blended polymer compound comprising the recycled polymer, the magnesium oxide, and the optional one or more additional components.

The melt blending step may be carried out by any suitable means known in the art, and typically using a plastic extruder. The melt blending may be carried out using any suitable plastic extruder in the art, including extruders of laboratory scale or commercial scale. The plastic extruder can be selected by a person of skill in the art.

For example, the melt-blended polymer compound may be prepared using a twin-screw plastic extruder (e.g. **"Zwillingsschnecken Extruder ZSK** 32" by Coperion). **The twin-** screw plastic extruder may be operated using a screw speed of in a range of about 400 - 1000 revolutions per minute (rpm), a throughput in a range of about 3 to 10 kg per hour, a vacuum in a range of about 300 - 650 millibar (mBar) and barrel temperatures ranging between 170 and 220 °C. There are also other plastic extruders, like single screw extruders, which may be used for the process. A person with skill in the art is able to select a suitable device and operating conditions to provide a melt-blended polymer compound according to the present invention based on the disclosure herein.

A suitable recipe for preparing the melt-blended polymer compound may be, but is not limited to:

about 94.5 wt.% of the recycled polymer;
about 5 wt.% of MgO,
about 0.2 wt.% of a primary antioxidant (e.g. Irganox 1010),
about 0.2 wt.% of a secondary antioxidant (e.g. Irgafos 168),
about 200 ppm of an acid scavenger (e.g. calcium stearate).

### III. Reduction of the emission of volatile organic compounds

One aspect of the present invention provides a use of a magnesium oxide for reducing the emission of one or more volatile organic compounds from recycled polymer or from a composition comprising said recycled polymer.

The recycled polymer is not particularly limited. In one preferred embodiment, the recycled polymer comprises recycled polyolefin, like recycled polypropylene, recycled polypropylene, or a combination thereof. In one particularly preferred embodiment, the recycled polymer comprises at least 60 wt.% of recycled polypropylene, based on the total weight of the recycled polymer. A composition comprising the recycled polymer may be, but is not limited to, a polymer composition (e.g. like a polymer compound) which comprises the recycled polymer in combination with unused polymer, like unused polyolefin (e.g. unused polypropylene), and optionally one or more (stabilizing) additives.

Further embodiments and preferred embodiments of the recycled polymer and the magnesium oxide are as described herein, e.g. in sections I.1 and I.2.

The one or more volatile organic compounds may be one or more volatile organic compounds having a boiling point of below 180°C or below 150°C. The one or more volatile organic compounds may be aromatic compounds, aldehydes, ketones, alcohols, carboxylic acids, or combinations thereof. The reduction of said one or more volatile organic compounds may be achieved in combination with additional volatile organic compounds. The aromatic compounds may be an optionally alkylated benzene (e.g. benzene or toluene). The aldehydes may be branched or unbranched, saturated or unsaturated C1 to C8 aldehydes. The ketones may be branched or unbranched, saturated or unsaturated C3 to C8 ketones. The alcohols may be branched or unbranched, saturated or unsaturated C1 to C6 alcohols. The carboxylic acids may be branched or unbranched, saturated or unsaturated C1 to C4 carboxylic acids.

In one preferred embodiment, the one or more volatile organic compounds is/are acrolein, hexanal, acetic acid, acetaldehyde, acetone, tert-butanol, benzene, or any combination thereof, and optionally in combination with one or more additional volatile organic compounds.

In one preferred embodiment, the one or more volatile compounds is acrolein, optionally in combination with one or more additional volatile organic compounds. The reduction of acrolein is specifically desirable since acrolein is under particular scrutiny for being potentially cancerogenic. Thus, in one preferred embodiment, the present invention provides a use of magnesium oxide for reducing the emission of acrolein from recycled polymer or a composition comprising the same. In one preferred embodiment, the present invention provides a use of magnesium oxide for reducing the emission of acrolein from recycled polymer comprising recycled polyolefin (e.g. recycled polypropylene, recycled polyethylene, or a combination of both) or a composition comprising the same, and more preferably from a recycled polymer as described in section I.1 or a composition comprising the same.

In one preferred embodiment, the one or more volatile compounds is/are acetic acid, acetaldehyde, acetone, tert-butanol, or any combination thereof, and optionally in combination with one or more additional volatile organic compounds. Said volatile organic compounds are typical considered in the automotive industry to be among relevant compounds when determining the emission of a polymer. It is desirable that said VOCs are emitted on a as low as possible level. Thus, in one preferred embodiment, the present invention provides a use of magnesium oxide for reducing the emission of acetic acid, acetaldehyde, acetone, tert-butanol, or any combination thereof, from recycled polymer or a composition comprising the same. In one preferred embodiment, the present invention provides a use of magnesium oxide for reducing the emission of acetic acid, acetaldehyde, acetone, tert-butanol, or any combination thereof, from recycled polymer comprising recycled polyolefin (e.g. recycled polypropylene, recycled polyethylene, or a combination of both) or a composition comprising the same, and more preferably from a recycled polymer as described in section I.1 or a composition comprising the same.

The reduction of the emission(s) may be determined using HS-GC-HS. The reduction may be determined on a powder sample (e.g. obtained by (cryo-)milling). The powder sample may have an amount of about 2.0 g.

In one embodiment, the one or more volatile compounds is acetic acid, optionally in combination with one or more additional volatile organic compounds, and the emission of acetic acid is reduced by more than 90%, more than 95%, or even more than 99%.

In one embodiment, the one or more volatile compounds is acetaldehyde, optionally in combination with one or more additional volatile organic compounds, and the emission of acetaldehyde is reduced by more than 25%, more than 35%, or even more than 40%.

In one embodiment, the one or more volatile compounds is acetone, optionally in combination with one or more additional volatile organic compounds, and the emission of acetone is reduced by more than 15%, more than 30%, or even more than 35%.

In one embodiment, the one or more volatile compounds is tert-butanol, optionally in combination with one or more additional volatile organic compounds, and the emission of tert-butanol is reduced by more than 15%, more than 25%, or even more than 30%.

In one embodiment, the use comprises the following reductions of volatile organic compounds, optionally in combination with the reduction of additional volatile organic compounds:

(i) the emission of acetic acid is reduced by more than 90%, more than 95%, or even more than 99%;
(ii) the emission of acetaldehyde is reduced by more than 25%, more than 35%, or even more than 40%;
(iii) the emission of acetone is reduced by more than 15%, more than 30%, or even more than 35%; and
(iv) the emission of tert-butanol is reduced by more than 15%, more than 25%, or even more than 30%.

The amount of emissions from a recycled polymer may increase when the recycled polymer is heated, for example, to a temperature range which is typical for a melt blending or melt extrusion process (e.g. a temperature in a range of 150 to 300°C, 180 to 280°C, 200 to 280°C, or 210 to 260°C). Without wishing to be bound by theory, it is believed that during heating of the recycled polymer volatile organic compounds can segregate to the surface of the recycled polymer to be more readily released to the surroundings. Additionally or alternatively, new volatile organic compounds can form during heating of the polymer. Therefore, the magnesium oxide may preferably be used during and/or after a heating of the recycled polymer, and particularly during the heating. A use during and/or after the heating may be particularly effective in view of the increase of emissions in connection with the heating.

The use typically comprises the mixing of the magnesium oxide with the recycled polymer to provide a composition. The recycled polymer and the magnesium oxide may be mixed in a weight ratio in a range of 99.9 : 0.1 to 50 : 50, preferably in a range of 99.9 : 0.1 to 75.0 : 25.0, in a range of 99.8 : 0.2 to 85.0 : 15.0, in range of 99.9 : 0.2 to 88.0 : 12.0, in range of 99.8 : 0.2 to 97.0 : 3.0, or in a range of 99.5 : 0.5 to 98.0 : 2.

The use preferably comprises a heating of a composition comprising the magnesium oxide and the recycled polymer, like a composition obtained from mixing the magnesium oxide and the recycled polymer. The heating may be a heating to a temperature in a range of 150 to 300°C, preferably in a range of 180 to 280°C, 200 to 280°C, or 210 to 260°C.

When the use comprises the mixing and the heating, the mixing and the heating may be carried out separately, simultaneously, or both. In one preferred embodiment, the use comprises a melt blending or melt extrusion of the magnesium oxide with the recycled polymer or a composition comprising the same. In one preferred embodiment, the magnesium oxide is used in a process for melt extruding the recycled polymer or a composition comprising the same.

The use may comprise the steps of:

- providing recycled polymer, preferably comprising recycled polyolefin, and more preferably comprising at least 60 wt.% of recycled polypropylene, based on the total weight of the recycled polymer,
- providing a magnesium oxide,
- optionally providing one or more additional components selected from unused polymers, fillers, fibers, and additives,
- mixing the recycled polymer and the magnesium oxide, and the optional one or more additional components, to provide a composition comprising the recycled polymer, the magnesium oxide, and the optional one or more additional components, and
- optionally heating the composition (e.g. to a temperature of in a range of 150 to 300°C, like in a range of 180 to 280°C, 200 to 280°C, or 210 to 260°C).

The one or more additional components may be as defined herein, e.g. in section I.3. In one preferred embodiment, the one or more additional components at least comprise one or more additives as defined herein, e.g. in section I.3.

The mixing step may be a dry blending or a melt blending step as described herein above for the process of preparation. When the mixing step is a dry blending step, the obtained composition is a dry blend. When the mixing step is a melt blending step, the obtained composition is a melt-blended polymer compound. When the mixing step is a melt blending step, then the use comprises a heating of the composition which is carried out simultaneously with the mixing step. It is preferred that the mixing step is a melt blending step.

Thus, in one preferred embodiment, the use comprises the steps of:

- providing recycled polymer, preferably comprising recycled polyolefin, and more preferably comprising at least 60 wt.% of recycled polypropylene, based on the total weight of the recycled polymer,
- providing a magnesium oxide,
- optionally providing one or more additional components selected from unused polymers, fillers, fibers, and additives,
- melt blending (e.g. in a plastic extruder) the recycled polymer and the magnesium oxide, and the optional one or more additional components, to provide a melt-blended polymer compound comprising the recycled polymer, the magnesium oxide, and the optional one or more additional components.

In one more preferred embodiment, the use comprises the steps of:

- providing recycled polymer, preferably comprising recycled polyolefin, and more preferably comprising at least 60 wt.% of recycled polypropylene, based on the total weight of the recycled polymer,
- providing a magnesium oxide,
- optionally providing one or more additional components selected from unused polymers, fillers, fibers, and additives,
- melt blending (e.g. in a plastic extruder) the recycled polymer and the magnesium oxide, and the optional one or more additional components, to provide a melt-blended polymer compound comprising the recycled polymer, the magnesium oxide, and the optional one or more additional components, wherein the recycled polymer and the magnesium oxide are melt-blended in a weight ratio in a range of 99.9 : 0.1 to 50 : 50, preferably in a range of 99.9 : 0.1 to 75.0 : 25.0, in a range of 99.8 : 0.2 to 85.0 : 15.0, in range of 99.9 : 0.2 to 88.0 : 12.0, in range of 99.8 : 0.2 to 97.0 : 3.0, or in a range of 99.5 : 0.5 to 98.0 : 2.

The composition (e.g. the dry blend or the melt-blended compound) obtained after the mixing step, and the optional heating step, may be characterized by the amount of emission(s) as defined herein, e.g. in section I, and by the embodiments and preferred embodiments as defined for the composition described herein, e.g. in section I.

In a related aspect, the present invention provides a method for reducing the emission of one or more volatile organic compounds from recycled polymer or from a composition comprising said recycled polymer, the method comprising mixing magnesium oxide with the recycled polymer or a composition comprising the same.

The recycled polymer is not particularly limited. In one preferred embodiment, the recycled polymer comprises recycled polyolefin, like recycled polypropylene, recycled polypropylene, or a combination thereof. In one particularly preferred embodiment, the recycled polymer comprises at least 60 wt.% of recycled polypropylene, based on the total weight of the recycled polymer. A composition comprising the recycled polymer may be, but is not limited to, a polymer composition (e.g. like a polymer compound) which comprises the recycled polymer in combination with unused polymer, like unused polyolefin (e.g. unused polypropylene), and optionally one or more (stabilizing) additives.

Embodiments and preferred embodiments of the one or more volatile organic compounds, the reduction of the one or more volatile organic compounds, the magnesium oxide, and the recycled polymer are as defined herein, e.g. in section I or in the present section.

In one embodiment, the present invention provides a method for reducing the emission of acrolein from recycled polymer or a composition comprising said recycled polymer, the method comprising mixing magnesium oxide with the recycled polymer or a composition comprising the same. In one embodiment, the present invention provide a method for reducing the emission of acetic acid, acetaldehyde, acetone, tert-butanol, or any combination thereof, from recycled polymer or a composition comprising said recycled polymer, the method comprising mixing magnesium oxide with the recycled polymer or a composition comprising the same.

The recycled polymer and the magnesium oxide may be mixed in a weight ratio in a range of 99.9 : 0.1 to 50 : 50, preferably in a range of 99.9 : 0.1 to 75.0 : 25.0, in a range of 99.8 : 0.2 to 85.0 : 15.0, in range of 99.9 : 0.2 to 88.0 : 12.0, in range of 99.8 : 0.2 to 97.0 : 3.0, or in a range of 99.5 : 0.5 to 98.0 : 2. The mixing of the magnesium oxide and the recycled polymer or the composition comprising the same provides a composition comprising the magnesium oxide, the recycled polymer, and optionally one or more additional components. The optional one or more additional components may be as defined herein, e.g. in section I.3. In one preferred embodiment, the one or more additional components at least comprise one or more additives as defined herein, e.g. in section I.3.

The method preferably comprises a heating of the composition comprising the magnesium oxide and the recycled polymer. The heating may be a heating to a temperature in a range of 150 to 300°C, like in a range of 180 to 280°C, 200 to 280°C, or 210 to 260°C. When the method comprises the mixing and the heating, the mixing and the heating may be carried out separately, simultaneously, or both. In one preferred embodiment, the method comprises a melt blending or melt extrusion of the magnesium oxide in combination with the recycled polymer or a composition comprising the same. In one preferred embodiment, the magnesium oxide is used in a process for melt extruding the recycled polymer or a composition comprising the same.

The method may comprise the steps of:

- providing recycled polymer, preferably comprising recycled polyolefin, and more preferably comprising at least 60 wt.% of recycled polypropylene, based on the total weight of the recycled polymer,
- providing a magnesium oxide,
- optionally providing one or more additional components selected from unused polymers, fillers, fibers, and additives,
- mixing the recycled polymer and the magnesium oxide, and the optional one or more additional components, to provide a composition comprising the recycled polymer, the magnesium oxide, and the optional one or more additional components, and
- optionally heating the composition (e.g. to a temperature of in a range of 150 to 300°C, like in a range of 180 to 280°C, 200 to 280°C, or 210 to 260°C).

The mixing step may be a dry blending or a melt blending step as described herein above for the process of preparation.

The mixing step may be a dry blending or a melt blending step as described herein above for the process of preparation. When the mixing step is a dry blending step, the obtained composition is a dry blend. When the mixing step is a melt blending step, the obtained composition is a melt-blended polymer compound. When the mixing step is a melt blending step, then the method comprises a heating of the composition which is carried out simultaneously with the mixing step. It is preferred that the mixing step is a melt blending step.

Thus, in one preferred embodiment, the method comprises the steps of:

- providing recycled polymer, preferably comprising recycled polyolefin, and more preferably comprising at least 60 wt.% of recycled polypropylene, based on the total weight of the recycled polymer,
- providing a magnesium oxide,
- optionally providing one or more additional components selected from unused polymers, fillers, fibers, and additives,
- melt blending (e.g. in a plastic extruder) the recycled polymer and the magnesium oxide, and the optional one or more additional components, to provide a melt-blended polymer compound comprising the recycled polymer, the magnesium oxide, and the optional one or more additional components.

In one more preferred embodiment, the method comprises the steps of:

- providing recycled polymer, preferably comprising recycled polyolefin, and more preferably comprising at least 60 wt.% of recycled polypropylene, based on the total weight of the recycled polymer,
- providing a magnesium oxide,
- optionally providing one or more additional components selected from unused polymers, fillers, fibers, and additives,
- melt blending (e.g. in a plastic extruder) the recycled polymer and the magnesium oxide, and the optional one or more additional components, to provide a melt-blended polymer compound comprising the recycled polymer, the magnesium oxide, and the optional one or more additional components, wherein the recycled polymer and the magnesium oxide are melt-blended in a weight ratio in a range of 99.9 : 0.1 to 50 : 50, preferably in a range of 99.9 : 0.1 to 75.0 : 25.0, in a range of 99.8 : 0.2 to 85.0 : 15.0, in range of 99.9 : 0.2 to 88.0 : 12.0, in range of 99.8 : 0.2 to 97.0 : 3.0, or in a range of 99.5 : 0.5 to 98.0 : 2.

The composition (e.g. the dry blend or the melt-blended compound) obtained after the mixing step, and the optional heating step, may be characterized by the amount of emission(s) as defined herein, e.g. in section I, and by the embodiments and preferred embodiments as defined for the composition described herein, e.g. in section I.

## IV. Example section

### IV.1 Methods

IV.1.1 Headspace gas chromatography coupled with mass spectrometry (HS-GC-MS)

Qualitative identification of small (volatile) molecules was carried out by headspace gas chromatography coupled with mass spectrometry (HS-GC-MS).

**Static headspace analysis for the screening of marker substances**

The parameters of the applied headspace gas chromatography mass spectrometry (HS/GC/MS) method are described here. For the measurement of a standard solution, 5 μl of a standard solution containing 0.33 μg/μL acetaldehyde, 0.36 μg/μL D-limonene, 5.99 μg/μL acetone and 0.40 μg/μL tert-butanol (solvent: 2-butanol) were injected into a 20 mL HS vial and tightly closed with a PTFE cap. Another standard solution was prepared in a similar way but contained 0.1 μg/μL benzene (solvent: methanol). A third standard solution was also prepared in a similar way but contained 0.1 μg/μL acrolein (solvent: methanol) but used 2 μL injection volume instead.

The samples were analysed by static HS/GC/MS in order to determine acetaldehyde, acetone, tert-butanol, acetic acid, hexanal, benzene and acrolein. Regarding the sample preparation about 10 g of polymer sample was cryo-milled with the aid of liquid nitrogen and a rotor mill (ring sieve, aperture size: 1 mm).

- An aliquot of 2.000 ± 0.100 g of the cryo-milled sample was weighed in a 20 mL HS vial and tightly sealed with a PTFE cap (Reference).
- An aliquot of 2.000 ± 0.100 g of a cryo-milled sample and 20 mg ± 2 mg ZnO were weighed in a 20 mL HS vial and tightly sealed with a PTFE cap (Reference + ZnO)
- An aliquot of 2.000 ± 0.100 g of a cryo-milled sample and 20 mg ± 2 mg MgO were weighed in a 20 mL HS vial and tightly sealed with a PTFE cap (Reference + MgO)

The prepared samples were heated up to 250 °C for 10 minutes and let cool down to room temperature before the actual HS/GC/MS measurements. The samples were analysed by HS/GC/MS at 100 °C / 2 h isothermal headspace conditions.

Applied headspace parameters for the analyses of standards and samples differed in specific HS parameters. Apart from that, method parameters were kept the same for standard and sample runs. The mass spectrometer was operated in scan mode and a total ion chromatogram (TIC) was recorded for each analysis. Identification of substances was supported by deconvolution and a retention time comparison to the respective marker substance in the standard. More detailed information on method parameters is given below:

• HS parameter (Agilent G1888 Headspace Sampler)

| | |
|---|---|
| Vial equilibration time: | 5 min (standard), 120 min (sample) |
| Oven temperature: | 200 °C (standard), 100 °C (sample) |
| Loop temperature: | 205 °C (standard), 110 °C (sample) |
| Transfer line temperature: | 210 °C (standard), 120 °C (sample) |

Low shaking

• GC parameter (Agilent 7890A GC System)

| | |
|---|---|
| Column: | ZB-WAX 7HG-G007-22 (30 m × 250 μm × 1 μm) |
| Carrier gas: | Helium 5.0 |
| Flow: | 2 ml/min |
| Split: | 10:1 |
| GC oven program: | 35 °C for 0.1 min; 10 °C/min until 250 °C; 250 °C for 1 min |

• MS parameter (Agilent 5975C inert XL MSD)

| | |
|---|---|
| Acquisition mode: | Scan |
| Scan parameters: | |
| Low mass: | 20 |
| High mass: | 200 |

(continued)

| | |
|---|---|
| Threshold: | 10 |

Data evaluation

For further data evaluation extracted ion chromatograms (EICs) of the measured marker compounds in the standard and in the samples were used. The corresponding target ions are depicted in Table A.

**Table A:** Substance specific target ions of selected marker substances.

| Substance | Target ion (m/z) |
|---|---|
| Acetaldehyde | 44 |
| Acetone | 58 |
| tert-Butanol | 59 |
| Acetic Acid | 60 |
| Hexanal | 44 |
| Benzene | 78 |

The standard concentration of a marker substance in the HS vial ( $C_G^{Standard}$ ) was calculated according equation 1, where the marker substance concentration in the liquid standard ( $C_L^{Standard}$ was multiplied by the injection volume ( $V_L^{Injection}$ ) of the standard and divided by the volume of the HS vial ( $V_G^{HS}$ ). Here, a HS volume of 20 mL is used by default.

$$C_G^{Standard} = \frac{C_L^{Standard} * V_L^{Injection}}{V_G^{HS}}$$   Equation 1

For each marker compound in the standard a response factor (Rf) was calculated according equation 2.

$$Rf = \frac{C_G^{Standard}}{Peak\ area^{Standard}}$$   Equation 2

Therein, the marker compound concentration is divided by the integrated peak area of the corresponding marker compound in the EIC (**Peak area$^{Standard}$**).

In order to estimate the respective marker compound concentration in the headspace of a sample ( $C_G^{Sample}$ ), equation 3 was used. Therefore, the obtained response factor from equation 2 is multiplied by the peak area of the corresponding marker compound in the EIC of the sample run (**Peak area$^{Sample}$**).

$$C_G^{Sample} = Rf * Peak\ area^{Sample}$$   Equation 3

For acrolein a different evaluation was performed. As shown in the figure 1 below an overlay of EICs (m/z 56) of the blank, the standard and the measured samples was performed.

IV.1.2 Melt flow rate (MFR)

The melt flow rates MFR$_2$ were measured according to ISO 1133 with a load of 2.16 kg at 230 °C or 190°C as indicated in parenthesis for the defined parameter. The melt flow rate is that quantity of polymer in grams which the test apparatus standardised to ISO 1133 extrudes within 10 minutes at a temperature of 230 °C, respectively 190 °C, under a load of 2.16 kg.

IV.1.3 CRYSTEX analysis (crystalline and soluble fractions method)

The crystalline (CF) and soluble fractions (SF) of polypropylene compositions as well as the comonomer content and intrinsic viscosities of the respective fractions were analysed by use of the CRYSTEX (crystallisation extraction) method. Potential instruments that can be used are Crystex QC or Crystex 42 (Polymer Char, Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions were separated through temperature cycles of dissolution at 160°C, crystallization at 40°C and re-dissolution in 1,2,4-trichlorobenzene at 160°C. Quantification of SF and CF and determination of ethylene content (C2) were achieved by means of an integrated infrared detector (IR4) and for the determination of the intrinsic viscosity (IV) an online 2-capillary viscometer was used. The IR4 detector was a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. The IR4 detector was calibrated with series of 8 EP copolymers with known Ethylene content in the range of 2 wt.% to 69 wt.-% (determined by 13C-NMR) and each at various concentrations, in the range of 2 and 13 mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 + f*Abs(CH)*Abs(CH_3)$$

(Equation 1)

$$CH_3/1000C = a + b*Abs(CH) + c* Abs(CH_3) + d * (Abs(CH_3)/Abs(CH)) + e * (Abs(CH_3)/Abs(CH))^2$$

(Equation 2)

The constants a to f for equation 1 and a to e for equation 2 were determined by using least square regression analysis.

The CH$_3$/1000C was converted to the ethylene content in wt.% using following relationship:

$$Wt.\% \text{ (Ethylene in EP Copolymers)} = 100 - CH_3/1000C * 0.3$$

(Equation 3)

Amounts of Soluble Fraction (SF) and Crystalline Fraction (CF) were correlated through the XS **calibration to the "Xylene Cold Soluble" (XCS) quantity and respectively Xylene Cold Insoluble** (XCI) fractions, determined according to standard gravimetric method as per ISO16152. XS calibration was achieved by testing various EP copolymers with XS content in the range 2-31 wt.%. The determined XS calibration was linear:

$$Wt.\% \ XS = 1{,}01* Wt.\% \ SF$$

(Equation 4)

Intrinsic viscosity (IV) of the parent EP copolymer and its soluble and crystalline fractions were determined with a use of an online **2-capillary viscometer and were correlated to corresponding** IV's determined by standard method in decalin according to ISO 1628-3. Calibration was achieved with various EP PP copolymers with IV = 2-4 dL/g. The determined calibration curve was linear:

$$IV \text{ (dL/g)} = a* Vsp/c$$

(Equation 5)

The samples to be analysed were weighed out in concentrations of 10 mg/ml to 20 mg/ml. To avoid injecting possible gels and/or polymers which do not dissolve in TCB at 160°C, like PET and PA, the weighed out sample was packed into a stainless steel mesh MW 0,077/D 0,05mm.

After automated filling of the vial with 1,2,4-TCB containing 250 mg/l 2,6-tert-butyl-4-methylphenol (BHT) as antioxidant, the sample was dissolved at 160°C until complete dissolution is achieved, usually for 60 min, with constant stirring of 400 rpm. To avoid sample degradation, the polymer solution was blanketed with the $N_2$ atmosphere during dissolution. A defined volume of the sample solution was injected into the column filled with inert support where the crystallization of the sample and separation of the soluble fraction from the crystalline part was taking place. This process was repeated two times. During the first injection the whole sample was measured at high temperature, determining the IV [dl/g] and the C2[wt.-%] of the PP composition. During the second injection the soluble fraction (at low temperature) and the crystalline fraction (at high temperature) with the crystallization cycle were measured (wt.-% SF, wt.-% C2, IV).

IV.1.4 Quantification of microstructure by NMR spectroscopy (calibration only)

Quantitative nuclear-magnetic resonance (NMR) spectroscopy was used for calibration. Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.
To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra. Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.
Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer:

$$fE = ( E / ( P + E ) )$$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents.
The mole percent comonomer incorporation was calculated from the mole fraction:

$$E \ [mol\%] = 100 * fE$$

The weight percent comonomer incorporation was calculated from the mole fraction:

$$E \ [wt\%] = 100 * ( fE * 28.06 ) / ( ( fE * 28.06 ) + ((1\text{-}fE) * 42.08) ).$$

IV.1.5 Limonene detection

Limonene quantification can be carried out using solid phase microextraction (HS-SPME-GC-MS) by standard addition.
50 mg ground samples are weighed into 20 mL headspace vials and after the addition of limonene in different concentrations and a glass-coated magnetic stir bar, the vial is closed with a magnetic cap lined with silicone/PTFE. Micro capillaries (10 pL) are used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene is used in combination with some of the samples tested in this application. For quantification, ion-93 acquired in SIM mode is used. Enrichment of the volatile fraction is carried out by headspace solid phase microextraction with a 2 cm stable flex 50/30 pm DVB/Carboxen/PDMS fibre at 60°C for 20 minutes. Desorption is carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

IV.1.6 Intrinsic viscosity

The intrinsic viscosity (iV) was measured according to DIN ISO 1628/1 (4th edition, 2021-02), in Decalin at 135°C.

IV.1.7 Density

The density was measured according to ISO 1183-187. Sample preparation was done by compression molding in accordance with ISO 1873-2:2007.

IV.1.8 Flexural modulus

The Flexural Modulus is determined according to ISO 178 method A (3-point bending test) on 80 mm × 10 mm × 4 mm specimens. Following the standard, a test speed of 2 mm/min and a span length of 16 times the thickness was used. The testing temperature was $23\pm2$ ° C. Injection moulding was carried out according to ISO 19069-2 using a melt temperature of 230 °C for all materials irrespective of material melt flow rate.

IV.1.9 Notched impact strength

The Charpy notched impact strength (NIS) is measured according to ISO 179 1eA at +23 °C, using injection moulded bar test specimens of $80\times10\times4$ mm$^3$ prepared in accordance with ISO 19069-2 using a melt temperature of 230 °C for all materials irrespective of material melt flow rate.

IV.1.10 Inorganic residues

Inorganic residues are quantified according to DIN ISO 1172:1996 using a Perkin Elmer TGA 8000. Approximately 10-20 mg of material was placed in a platinum pan. The temperature was equilibrated at 50 °C for 10 minutes, and afterwards raised to 950 °C under nitrogen at a heating rate of 20 °C/min. The ash content was evaluated as the weight % at 850 °C.

**IV.2 Materials**

IV.2.1 Magnesium oxide (MgO)

The magnesium oxide (MgO) was commercially obtained from Kyowa Chemical Industry Co., Ltd under the product name *"Kyowamag™ 150"* (other commercial suppliers of MgO exist as well). The CAS number of the material is: 1309-48-4. According to the product information provided by the supplier, the MgO has a specific surface area (BET) of about 155 m$^2$/g, a particle size distribution d50 of about 4.5 $\mu$m and a particle size distribution d90 of about 12 $\mu$m.

IV.2.2 Zinc oxide (ZnO)

The zinc oxide (ZnO) was a commercial product obtained from Lanxess under the product name **"ZINKOXID AKTIV". The** CAS number of the material is 1314-13-2.

IV.2.3 Recycled polymer

As the recycled polymer, a PP-rich recyclate derived from post-consumer waste was used. The recyclate had a polypropylene content of about 94.8 wt % and a polyethylene content of at least 4 wt.%, as determined by FT-IR on a solid specimen. Further properties of the recycled polymer are provided in table 1 herein below.

Table 1: properties of recycled polymer

| | | |
|---|---|---|
| $MFR_2$ (230°C; 2.16kg) | [g/10 min] | 25 |
| C2(total) | [wt.-%] | 5.4 |
| Soluble fraction (SF) | [wt.-%] | 11 |
| C2(SF) | [wt.-%] | 27.7 |
| iV(SF) | [dL/g] | 1.71 |
| Crystalline fraction (CF) | [wt.-%] | 89 |
| C2(CF) | [wt.-%] | 3.2 |
| iV(CF) | [dL/g] | 1.55 |
| Limonene content* | [ppm] | 12 |
| Inorganic residues** | [wt.-%] | 1.5 |
| Flexural modulus | [MPa] | 1344 |
| Charpy NIS (+23°C) | [kJ/m$^2$] | 5.14 |
| Density | [kg/m$^3$] | 917 |
| * measured by HS-SPME-GC-MS. <br> ** incl. about 640 ppm of Mg as determined by XRF analysis. | | |

**IV.3 Examples**

10 g of the recycled polymer was cryo-milled with the aid of liquid nitrogen and a rotor mill (ring sieve, aperture size: 1 mm).

Reference Ref.1:
an aliquot of 2.000 ± 0.100 g of the cryo-milled sample was weighed in a 20 mL HS vial and tightly sealed with a PTFE cap.

Comparative example CE1:
an aliquot of 2.000 ± 0.100 g of the cryo-milled sample and 20 mg ± 2 mg ZnO were weighed in a 20 mL HS vial to provide a dry blend. The vial was tightly sealed with a PTFE cap.

Inventive example IE1:
an aliquot of 2.000 ± 0.100 g of the cryo-milled sample and 20 mg ± 2 mg MgO were weighed in a 20 mL HS vial to provide a dry blend. The vial was tightly sealed with a PTFE cap.

The prepared samples were heated up to 250 °C for 10 minutes and let cool down to room temperature before the actual HS/GC/MS measurements. The samples were analysed by HS/GC/MS at 100 °C / 2 h isothermal headspace conditions. Results are described below in table 2.

Table 2:

| Example no. | Ref.1 | CE1 | IE1 |
|---|---|---|---|
| **Components** | [wt.%] | [wt.%] | [wt.%] |
| Recycled polymer | 100 | 99.00 | 99.00 |
| ZnO | | 1.00 | |
| MgO | | | 1.00 |
| | | | |
| **VOC** | Conc. [mg/m$^3$] | Conc. [mg/m$^3$] | Conc. [mg/m$^3$] |
| Hexanal | 61 | 53 | 12 |

(continued)

| VOC | Conc. [mg/m³] | Conc. [mg/m³] | Conc. [mg/m³] |
|---|---|---|---|
| Acetic acid | 12 124 | 642 | LOD* |
| Acetaldehyde | 3554 | 3554 | 1807 |
| Acetone | 5399 | 6426 | 3261 |
| Tert-butanol | 531 | 532 | 333 |
| Benzene | 2 | 2 | 1 |
| * below level of detection | | | |

As can be seen from the results provided in Table 2, the mixture of inventive example IE1 comprising the recycled polymer and MgO showed a significant reduction of all characteristic VOCs, when compared to the recycled polymer alone as reference (Ref.1). On the other hand, the mixture of comparative example CE1 comprising the recycled polymer and ZnO did not show a reduction of acetaldehyde, acetone, tert-butanol, and benzene. The reduction of hexanal and acetic acid was significantly less pronounced when using ZnO in comparison to MgO.

Fig. 1 shows an overlay of HS-GC-MS spectra as measured for samples of example Ref.1 (spectrum **with highest signal peak labelled "1"), comparative example CE2** (spectrum with second highest peak **labelled "2"), inventive example IE1 (spectrum with signal peak labelled "3"),** for a sample of an **acrolein standard (spectrum with signal peak labelled "4"), and a blank sample which shows no acrolein peak (spectrum labelled "5").** The signal at a retention time of about 2.62 min corresponds to acrolein. The sample of inventive example IE1 shows an acrolein signal peak which is much lower than that of example Ref.1 and comparative example CE1. This indicates a much lower acrolein content of the sample of inventive example IE1, when compared to the samples of example Ref.1 and comparative example CE1.

## Claims

1. A composition comprising:

   - recycled polymer comprising at least 60 wt.% of recycled polypropylene, based on the total weight of the recycled polymer, and
   - a magnesium oxide in an amount in a range of 0.1 to 15 wt.%, based on the total weight of the composition.

2. The composition according to claim 1, comprising the recycled polymer in an amount of at least 50 wt.%, based on the total weight of the composition.

3. The composition according to claim 1, comprising the recycled polymer in an amount of at least 75 wt.%, based on the total weight of the composition.

4. The composition according to any one of the preceding claims, wherein the recycled polymer comprises the recycled polypropylene together with recycled polyethylene in a weight ratio in a range of 60:40 to 99:1.

5. The composition according to any one of the preceding claims, wherein the recycled polymer is at least partially derived from post-consumer waste.

6. The composition according to any one of the preceding claims, wherein the recycled polymer has one or more of the following characteristics:

   (i) a melt flow (MFR$_2$), determined according to ISO 1133 at 230 °C and 2.16 kg, in a range from 5.0 to 50 g/10 min,
   (ii) an ethylene content (C2(total)), determined by FT-IR spectroscopy calibrated by quantitative $^{13}$C-NMR spectroscopy, in a range from 3.0 to 15.0 wt.-%,
   (iii) a soluble fraction (SF) content, determined according to CRYSTEX QC analysis, in the range from 5.0 to 20.0 wt.-%, and
   (iv) an ethylene content of the soluble fraction (C2(SF)), according to CRYSTEX QC analysis, determined by FT-IR spectroscopy calibrated by quantitative $^{13}$C-NMR spectroscopy, in the range from 15 to 50 wt.-%.

7. The composition according to any one of the preceding claims, wherein the composition is a dry blend.

8. The composition according to any one of claims 1 to 6, wherein the composition is a melt-blended polymer compound.

9. A process for preparing a composition according to any one of claims 1 to 8, the process comprising the steps of:

- providing recycled polymer comprising at least 60 wt.% of recycled polypropylene, based on the total weight of the recycled polymer,
- providing a magnesium oxide,
- optionally providing one or more additional components selected from unused polymers, fillers, fibers, and additives,
- mixing the recycled polymer and the magnesium oxide, and the optional one or more additional components, to provide a composition comprising the recycled polymer, the magnesium oxide, and the optional one or more additional components, and
- optionally heating the composition.

10. Use of a magnesium oxide for reducing the emission of one or more volatile organic compounds from recycled polymer or from a composition comprising said recycled polymer.

11. The use according to claim 10, wherein the recycled polymer comprises at least 60 wt.% of recycled polypropylene, based on the total weight of the recycled polymer.

12. The use according to claim 10 or 11, wherein the one or more volatile organic compounds is/are acrolein, hexanal, acetic acid, acetaldehyde, acetone, tert-butanol, benzene, or any combination thereof, and optionally in combination with one or more additional volatile organic compounds.

13. The use according to any one of claims 10 to 12, wherein the one or more volatile compounds is acrolein, optionally in combination with one or more additional volatile organic compounds.

14. The use according to any one of claims 10 to 12, wherein the one or more volatile compounds is/are acetic acid, acetaldehyde, acetone, tert-butanol, or any combination thereof, and optionally in combination with one or more additional volatile organic compounds.

15. The use according to any one of claims 10 to 14, wherein the use comprises a melt blending or melt extrusion of the magnesium oxide with the recycled polymer or the composition comprising the same.

**FIG. 1**

# EUROPEAN SEARCH REPORT

**Application Number**

EP 24 22 0648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/176287 A1 (DOW GLOBAL TECHNOLOGIES LLC [US]) 3 September 2020 (2020-09-03) * paragraph [0041] * * paragraph [0064] - paragraph [0070] * * table 1 * * claims 1-13 * | 10,12-15 | INV. C08K3/22 C08L23/12 |
| X | US 2014/163152 A1 (RAU RONALD C [GB] ET AL) 12 June 2014 (2014-06-12) * paragraphs [0039], [0043] * * claims 1-18 * | 10-15 1-9 | |
| Y | | | |
| X | CN 108 752 750 A (JIANGSU MINGDING NEW MATERIAL TECH CO LTD) 6 November 2018 (2018-11-06) * examples 1-6 * * claims 1-9 * | 1,2,4,5, 8,9 | |
| X | CN 111 344 348 A (SUMITOMO ELECTRIC INDUSTRIES) 26 June 2020 (2020-06-26) * examples 1, 3, 10, 11, 25 * * claims 1-11 * | 1-3,5, 7-9 | |
| X | CN 105 037 941 A (NANJING JULONG ENGINEERING PLASTICS CO LTD) 11 November 2015 (2015-11-11) * example 4 * * claims 1-8 * | 1,2,4-15 3 | TECHNICAL FIELDS SEARCHED (IPC) C08K |
| A | | | |
| Y | CN 111 286 124 A (GUANGDONG KINGFA SCIENTIFIC AND TECH CO LTD ET AL.) 16 June 2020 (2020-06-16) * claims 1-9 * | 1-9 10-15 | |
| A | | | |

The present search report has been drawn up for all claims

| Place of search | Date of completion of the search | Examiner |
|---|---|---|
| Munich | 22 May 2025 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 22 0648

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | Publication date | Patent family member(s) | | Publication date |
|---|---|---|---|---|---|
| WO 2020176287 | A1 | 03-09-2020 | AR | 118077 A1 | 15-09-2021 |
| | | | BR | 112021016603 A2 | 03-11-2021 |
| | | | CN | 113490708 A | 08-10-2021 |
| | | | EP | 3931245 A1 | 05-01-2022 |
| | | | JP | 7576558 B2 | 31-10-2024 |
| | | | JP | 2022521976 A | 13-04-2022 |
| | | | US | 2022145050 A1 | 12-05-2022 |
| | | | WO | 2020176287 A1 | 03-09-2020 |
| US 2014163152 | A1 | 12-06-2014 | CA | 2889669 A1 | 08-05-2014 |
| | | | EP | 2914652 A1 | 09-09-2015 |
| | | | US | 2014163152 A1 | 12-06-2014 |
| | | | WO | 2014070908 A1 | 08-05-2014 |
| CN 108752750 | A | 06-11-2018 | NONE | | |
| CN 111344348 | A | 26-06-2020 | CN | 111344348 A | 26-06-2020 |
| | | | JP | 7160048 B2 | 25-10-2022 |
| | | | JP | WO2019097877 A1 | 03-12-2020 |
| | | | KR | 20200083983 A | 09-07-2020 |
| | | | WO | 2019097877 A1 | 23-05-2019 |
| CN 105037941 | A | 11-11-2015 | NONE | | |
| CN 111286124 | A | 16-06-2020 | NONE | | |

EPO FORM P0459

For more details about this annex : see Official Journal of the European Patent Office, No. 12/82

## REFERENCES CITED IN THE DESCRIPTION

### Patent documents cited in the description

- EP 2976384 A2
- WO 2020176287 A1
- US 11161091 B2
- US 11965081 B2
- KR 101132922 B1
- WO 2019061266 A1
- WO 2019061268 A1
- US 11248116 B2

### Non-patent literature cited in the description

- **HANS ZWEIFEL**. Plastic Additives Handbook. 2009, 1141-1190
- **LJILJANA JEREMIC** ; **ANDREAS ALBRECHT** ; **MARTINA SANDHOLZER** ; **MARKUS GAHLEIT-NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 128-37-0
- **G. SINGH** ; **A. KOTHARI** ; **V. GUPTA**. *Polymer Testing*, 2009, vol. 28 (5), 475
- **Z. ZHOU** ; **R. KUEMMERLE** ; **X. QIU** ; **D. REDWINE** ; **R. CONG** ; **A. TAHA** ; **D. BAUGH** ; **B. WINNIFORD**. *J. Mag. Reson.*, 2007, vol. 187, 225
- **V. BUSICO** ; **P. CARBONNIERE** ; **R. CIPULLO** ; **C. PELLECCHIA** ; **J. SEVERN** ; **G. TALARICO**. *Macromol. Rapid Commun.*, 2007, vol. 28, 1128
- **CHENG, H. N**. *Macromolecules*, 1984, vol. 17, 1950
- **W-J. WANG** ; **S. ZHU**. *Macromolecules*, 2000, vol. 33, 1157
- *CHEMICAL ABSTRACTS*, 1309-48-4
- *CHEMICAL ABSTRACTS*, 1314-13-2